(19) Europäisches Patentamt
European Patent Office
Office européen des brevets

(11) EP 2 557 136 B1

(12) # EUROPEAN PATENT SPECIFICATION

(45) Date of publication and mention of the grant of the patent:
**08.10.2014 Bulletin 2014/41**

(21) Application number: **11766113.2**

(22) Date of filing: **05.04.2011**

(51) Int Cl.:
***C09J 133/08*** (2006.01) ***C09J 9/00*** (2006.01)
***C09J 5/00*** (2006.01) ***G06F 3/041*** (2006.01)

(86) International application number:
**PCT/KR2011/002355**

(87) International publication number:
**WO 2011/126262 (13.10.2011 Gazette 2011/41)**

(54) **ADHESIVE COMPOSITION FOR A TOUCH PANEL, ADHESIVE FILM, AND TOUCH PANEL**

HAFTZUSAMMENSETZUNG FÜR EINEN BERÜHRUNGSBILDSCHIRM, HAFTFILM UND BERÜHRUNGSBILDSCHIRM

COMPOSITION ADHÉSIVE DESTINÉE À UN PANNEAU TACTILE, FILM ADHÉSIF ET PANNEAU TACTILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.04.2010 KR 20100031102**

(43) Date of publication of application:
**13.02.2013 Bulletin 2013/07**

(73) Proprietor: **LG Hausys, Ltd.**
**Seoul 150-721 (KR)**

(72) Inventors:
- **KIM, Jang-Soon**
  **Seongnam-si**
  **Gyeonggi-do 463-889 (KR)**
- **SONG, Min-Seok**
  **Daejeon 305-810 (KR)**
- **LEE, Eok-Hyung**
  **Cheongju-si**
  **Chungcheongbuk-do 361-727 (KR)**
- **HAN, Hak-Rhim**
  **Cheongju-si**
  **Chungcheongbuk-do 361-300 (KR)**
- **CHOI, Won-Gu**
  **Cheongju-si**
  **Chungcheongbuk-do 361-758 (KR)**
- **LEE, Yong-Hoon**
  **Cheongju-si**
  **Chungcheongbuk-do 361-370 (KR)**

(74) Representative: **Plougmann & Vingtoft A/S**
**Rued Langgaards Vej 8**
**2300 Copenhagen S (DK)**

(56) References cited:
**EP-A1- 1 820 835** **EP-A2- 2 033 998**
**JP-A- 2009 155 503** **KR-A- 20070 075 340**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 557 136 B1

## Description

[Technical Field]

The present invention relates to an adhesive composition for a touch panel, an adhesive film, and a touch panel.

[Background Art]

Recently, the market for electronic devices, such as personal digital assistants (PDAs), terminals for mobile communications, and automotive navigation systems, has been growing. Such electronic devices are moving towards slimness, lightness, low-power consumption, high resolution, and high brightness.

In particular, an electronic device having a touchscreen or a touch panel switch as an input unit include a transparent conductive plastic film to achieve weight reduction while preventing breakage. For example, a polyethylene terephthalate (PET) base film having a conductive layer of indium tin oxide (ITO) stacked on one side thereof is stacked on a conductive glass, a reinforcing material or a decorative film via an adhesive layer.

An adhesive layer for attaching a transparent conductive film in a touchscreen or touch panel needs to have various physical properties, such as surface leveling performance for relieving an uneven surface due to a decorative film, durability for suppressing generation of curls or bubbles when exposed to severe conditions, e.g., high temperature or high humidity, cuttability for preventing the adhesive from sticking out or from being squashed when cut, and excellent adhesion or wettability to various adherends. Further, since a touch panel or touchscreen is frequently touched by the body, such as the hand or the face, in use, the adhesives also need to have resistance to sebum produced in the body, i.e., chemical resistance. EP 2 033 998 A2 discloses a pressure adhesive composition which contains an acrylic polymer and a crosslinking agent. The acrylic polymer having a weight average molecular weight of $40 \times 10^4$ to $160 \times 10^4$ and contains at least an alkoxyalkyl acrylate and an acrylic monomer having a crosslinkable functional group. The document furthermore discloses a product using said pressure sensitive adhesive composition and a display using said product.

EP 1 820 835 A1 discloses a pressure-sensitive adhesive tape or sheet having a lightreflective property and/or a light shielding property, which comprises a base material and at least one pressure-sensitive adhesive layer disposed on at least one surface of the base material, in which the pressure-sensitive adhesive composition containing an acrylic polymer (a) and a low-molecular weight polymer component (b) which contains, as a principal monomer component, an ethylenic unsaturated mmonomer having a glass transition temperature of from 60 to 190°C whenit is formed into a homopolymer and having a cyclic structure within the molecule thereof, and which has a weight-average molecular weight equal to or higher than 3,000 but lower than 20,000; in which the pressure-sensitive adhesive layer has a gel fraction of from 51 to 75wt% and a temperature, at a maximum of loss tangent (tan$\delta$), of from -14 to 25°C; and in which the pressure-sensitive adhesive tape or sheet has a reflectance of 60% or higher on at least one surface thereof and/or a transmittance of 0.3% or lower.

The co-pending European patent application 11766114.0 (published as EP 1 557 135 A2) describes an adhesive composition,an adhesive sheet and a touch panel, wherein the adhesive composition is prepared without using a low molecular weight polymer as an additive.

[Disclosure]

[Technical Problem]

The present invention is directed to an adhesive composition for a touch panel, an adhesive film, and a touch panel.

[Technical Solution]

One aspect of the present invention provides an adhesive composition for a touch panel comprising an acrylic resin and a polyfunctional crosslinking agent and satisfies the following Equations 1 and 2:

[Equation 1]

$$X_1 \leq 55$$

[Equation 2]

$$X_2 \geq 3.1\ \text{Kg/cm}^2\ (X_2 \geq 20\ \text{Kg/in}^2),$$

where $X_1$ represents a gel content of an adhesive, which is a cured product of the adhesive composition, and $X_2$ represents high temperature shear strength of the adhesive measured as follows: with one side of the adhesive attached to an indium tin oxide (ITO) surface of a polyethylene terephthalate (PET) film and the other side thereof attached to a stainless steel (SUS) surface, the adhesive is left at room temperature for 24 hours, followed by measurement of shear strength at a high temperature of 100°C and a crosshead speed of 5 mm/min.

Another aspect of the present invention provides an adhesive film for a touch panel comprising a base film; and an adhesive layer formed on one or both sides of the base film and comprising a cured product of the adhesive composition according to the present invention.

A further aspect of the present invention provides a touch panel comprising an upper conductive film having a conductive layer formed on one surface thereof; a lower conductive film having a conductive layer formed on one surface thereof to be separated from the conductive layer of the upper conductive film while facing each other; and an adhesive layer comprising a cured product of the adhesive composition according to the present invention and the adhesive layer being formed on each of edges of the upper and lower conductive films to bond the conductive films to each other. Dependent claims 14 and 15 provide preferred embodiments of the touch panel.

[Advantageous Effects]

According to the present invention, adhesives for a touch panel exhibit excellent chemical resistance, excellent durability under high-temperature or high-humidity conditions, and superior wettability and adhesion to various adherends. In addition, the adhesives according to the present invention may maintain excellent resistance of a conductive layer while effectively preventing corrosion of electrodes when applied to a touch panel.

[Description of Drawings]

Fig. 1 is a side-sectional view of an adhesive film according to one embodiment of the present invention;
Fig. 2 is a side-sectional view of an adhesive film according to another embodiment of the present invention;
Fig. 3 is a view of a touch panel according to one embodiment of the present invention;
Fig. 4 is a view of a touch panel according to another embodiment of the present invention; and
Fig. 5 is a view of a touch panel according to a further embodiment of the present invention.

[Best Mode]

In one aspect, the present invention provides an adhesive composition for a touch panel comprising an acrylic resin and a polyfunctional crosslinking agent and satisfies the following Equations 1 and 2:

[Equation 1]

$$X_1 \leq 55$$

[Equation 2]

$$X_2 \geq 3.1\ \text{Kg/cm}^2\ (X_2 \geq 20\ \text{Kg/in}^2),$$

where $X_1$ represents a gel content of an adhesive, which is a cured product of the adhesive composition, and $X_2$ represents high temperature shear strength of the adhesive measured as follows: with one side of the adhesive attached to an indium tin oxide (ITO) surface of a polyethylene terephthalate (PET) film and the other side thereof attached to a stainless steel (SUS) surface, the adhesive is left at room temperature for 24 hours, followed by measurement of shear strength at a high temperature of 100°C and a crosshead speed of 5 mm/min.

In the following, the adhesive composition for a touch panel according to one embodiment of the present

invention will be described in detail.

The adhesive composition includes an acrylic resin and a polyfunctional crosslinking agent and has a gel content of an adhesive which satisfies Equation 1. In the present invention, the gel content ($X_1$) may be calculated by Equation 3:

[Equation 3]

$$X_1 = B/A \times 100,$$

where A is the mass of the adhesive, and B is the dry mass of an insoluble fraction of the adhesive obtained by depositing the adhesive in ethyl acetate at room temperature for 48 hours, taking the insoluble fraction, and removing ethyl acetate from the insoluble fraction.

Specifically, the gel content may be measured as follows.

First, an adhesive is prepared using the adhesive composition according to the present invention, and a predetermined mass (A) of the adhesive is taken. Then, the adhesive is deposited in ethyl acetate at room temperature for 48 hours, after which an insoluble fraction of the adhesive is collected. Then, the insoluble fraction is dried under appropriate conditions to remove ethyl acetate, followed by measuring the mass of the insoluble fraction (as dry mass (B)). The obtained masses are substituted into Equation 3, thereby calculating the gel content. The conditions for drying the insoluble fraction to measure the dry mass are not particularly limited so long as ethyl acetate contained in the insoluble fraction can be thoroughly removed.

The adhesive produced from the adhesive composition according to the present invention has a gel content of 55% or less, preferably 50% or less, more preferably 45% or less, and still more preferably 30% or less. If the gel content of the adhesive is 55% or less, the adhesive can have excellent wettability or adhesion to a variety of adherends, maintain resistance of a conductive layer, and have superior chemical resistance, such as corrosion resistance and sebum resistance of an electrode layer, particularly when applied to a touch panel.

Although a lower limit of the gel content is not particularly defined, the adhesive may have a gel content of 5% or more, preferably 10% or more.

The adhesive composition satisfies Equation 2. That is, the adhesive according to the present invention has a high temperature shear strength value of 3.1 $Kg/cm^2$ (20 $Kg/in^2$) or more, preferably 3.9 $Kg/cm^2$ (25 $Kg/in^2$), at 100°C.

In the present invention, there is no restriction as to a method of measuring the high temperature shear strength of the adhesive. For example, the high temperature shear strength may be measured as follows. First, an adhesive is prepared from the adhesive composition according to the present invention and cut into a 2.54 cm x 2.54 cm (1 in x 1 in) (width x length) piece, thus preparing a sample. One side of the sample is attached to an ITO surface of a PET film and the other side thereof is attached to an SUS surface, after which the sample is left at room temperature for 24 hours. Then, the high temperature shear strength of the sample is measured in a 100°C oven at a crosshead speed of 5 mm/min using a universal testing machine (UTM, Zwick). Specifically, the high temperature shear strength may be evaluated according to a process descried below in the following examples of the specification.

If the adhesive has a high temperature shear strength value of 3.1 $Kg/cm^2$ (20 $Kg/in^2$) or more, the adhesive can have excellent wettability or adhesion to a variety of adherends, maintain resistance of a conductive layer, and have superior chemical resistance, such as corrosion resistance and sebum resistance of an electrode layer, particularly when applied to a touch panel.

According to the present invention, an upper limit of the high temperature shear strength may be, without being particularly limited to, for example, 11.5 $Kg/cm^2$ (70 $Kg/in^2$) or lower, preferably 9.3 $Kg/cm^2$ (60 $Kg/in^2$) or lower, and more preferably 7.8 $Kg/cm^2$ (50 $Kg/in^2$) or lower.

In some embodiments, the acrylic resin has a weight average molecular weight of 1,000,000 or more, preferably 1,500,000. According to the present invention, the weight average molecular weight is obtained based on polystyrene conversion in GPC (Gel Permeation Chromatography). If the acrylic resin has a weight average molecular weight of 1,000,000 or more, the adhesive can have excellent durability under high-temperature or high-humidity conditions and does not contaminate an adherend in re-peeling.

In the present invention, an upper limit of the weight average molecular weight of the acrylic resin may be 3,000,000 or lower, preferably 2,500,000 or lower in view of coatability.

Further, the acrylic resin has a glass transition temperature of -60°C or more, preferably -55°C or more. If the acrylic resin has a glass transition temperature of -60°C or more, the adhesive can have excellent physical properties overall including wettability and adhesion to various adherends.

An upper limit of the glass transition temperature of the acrylic resin is for example, -10°C or lower, preferably -20°C or lower.

There is no restriction as to the composition of the acrylic resin. For example, the acrylic resin may be a polymer of a monomer mixture comprising a (meth)acrylic acid ester monomer and a crosslinking monomer.

In the present invention, there is no restriction as to the kind of the (meth)acrylic acid ester monomer may include, for example, alkyl (meth)acrylates. In this case, when too long an alkyl group is included in the monomer, cohesion of the cured product can decrease and the glass transition temperature or tack of the cured product cannot properly be adjusted. Thus, alkyl (meth)acrylates having a C1 to C14, preferably C1 to C8 alkyl group, are used. Examples of such monomers may include methyl (meth)acrylate, ethyl (meth)acrylate, n-propyl (meth)acrylate, isopropyl (meth)acrylate, n-butyl (meth)acrylate, t-butyl (meth)acrylate, sec-butyl (meth)acrylate, pentyl (meth)acrylate, 2-ethylhexyl (meth)acrylate, 2-ethylbutyl (meth)acrylate, n-octyl (meth)acrylate, isooctyl (meth)acrylate, isobornyl (meth)acrylate, and isononyl methacrylate, which may be used alone or as mixtures.

In the present invention, the crosslinking monomer included in the monomer mixture is a monomer including both a copolymerizable functional compound (e.g., carbon-carbon double bond) and a crosslinking functional compound in the molecular structure, and may provide a polymer containing a crosslinking functional compound reacting with the polyfunctional crosslinking agent.

Available examples of the crosslinking monomer may comprise a hydroxyl group containing monomer, a carboxylic group containing monomer, and a nitrogen containing monomer, which may be used alone or as mixtures. Examples of the hydroxyl group containing monomer may include 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 2-hydroxyethylene glycol (meth)acrylate, or 2-hydroxypropylene glycol (meth)acrylate, without being limited thereto. Examples of the carboxylic group containing monomer may include acrylic acid, methacrylic acid, 2-(meth)acryloyloxy acetic acid, 3-(meth)acryloyloxy propyl acid, 4-(meth)acryloyloxy butyl acid, an acrylic acid dimer, itaconic acid, or maleic acid, without being limited thereto. Examples of the nitrogen containing monomer may include 2-isocyanatoethyl (meth)acrylate, 3-isocyanatopropyl (meth)acrylate, 4-isocyanatobutyl (meth)acrylate, (meth)acryl amide, N-vinylpyrrolidone, or N-vinylcaprolactam, without being limited thereto.

In the present invention, the monomer mixture includes 80 to 99.9 parts by weight of the (meth)acrylic acid ester monomer and 0.1 to 20 parts by weight of the crosslinking monomer, preferably 90 to 99.9 parts by weight of the (meth)acrylic acid ester monomer and 0.1 to 20 parts by weight of the crosslinking monomer. Within this range, the adhesive may have excellent reliability, treatment, durability, and re-peeling property and be effectively prevented from separating or peeling due to decrease in initial adhesive strength.

Unless otherwise indicated in the specification, "parts by weight" denotes "ratio by weight."

In the present invention, the monomer mixture may further include a comonomer represented by Formula 1 in order to impart glass transition temperature adjustment performance and other functions:

[Formula 1]

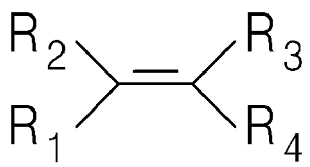

,

where $R_1$ to $R_3$ is each independently hydrogen or an alkyl group; and $R_4$ is a cyano group, an alkyl-substituted or unsubstituted phenyl group, an acetyloxy group, or $COR_5$, wherein $R_5$ is an alkyl or alkoxyalkyl-substituted or unsubstituted amino or glycidyloxy group.

In $R_1$ to $R_5$ in Formula 1, alkyl or alkoxy is C1 to C8 alkyl or alkoxy, preferably methyl, ethyl, methoxy, ethoxy, propoxy, or butoxy.

Available examples of the monomer represented by Formula 1 may include, without being limited to, a nitrogen containing monomer, such as (meth)acrylonitrile, N-methyl (meth)acrylamide or N-butoxymethyl (meth)acrylamide; styrene monomers, such as styrene or methyl styrene; glycidyl (meth)acrylate; and carboxylic acid vinyl esters, such as vinyl acetate, which may be used alone or as mixtures. When the comonomer is added to the monomer mixture, the comonomer may be present in an amount of 20 parts by weight or less based on the amount of the (meth)acrylic acid ester monomer or the crosslinking monomer. If the amount of comonomer is greater than 20 parts by weight, flexibility and/or peeling strength of the adhesive may deteriorate.

In the present invention, there is no restriction as to a method of producing an acrylic resin by polymerizing the monomer mixture including the foregoing ingredients. For example, a general polymerization method, such as solution polymerization, photo-polymerization, bulk polymerization, suspension polymerization, or emulsion polymerization, may be used. In the present invention, solution polymerization is preferably used to prepare the acrylic resin in view of transparency, water resistance, and cost, without being limited thereto.

The adhesive composition according to the present invention includes the polyfunctional crosslinking agent, and cohesion or adhesion of the cured product may be adjusted based on the amount of the polyfunctional crosslinking agent.

There is no restriction as to the kind of the polyfunctional crosslinking agent to be used in the present invention. For example, the polyfunctional crosslinking agent may include common crosslinking agents, such as isocyanate compounds, epoxy compounds, aziridine compounds, and metal chelate compounds. Examples of the isocyanate compound may include at least one selected from the group consisting of tolylene diisocyanate, xylene diisocyanate, diphenylmethane diisocyanate, hexamethylene diisocyanate, isophorone diisocyanate, tetramethylxylene diisocyanate, naphthalene diisocyanate, and adducts of at least one of these isocyanate compounds and a polyol (e.g., trimethylolpropane). Examples of the epoxy compounds may include at least one selected from the group consisting of ethylene glycol diglycidyl ether, triglycidyl ether, trimethylolpropane triglycidyl ether, N,N,N',N'-tetraglycidyl ethylene diamine, and glycerin diglycidyl ether. Examples of the aziridine compounds may include at least one selected from the group consisting of N,N'-toluene-2,4-bis(1-aziridinecarboxamide), N,N'-diphenylmethane-4,4'-bis(1-aziridinecarboxamide), triethylenemelamine, bisisophthaloyl-1-(2-methylaziridine), and tri-1-aziridinylphosphine oxide. Examples of the metal chelate compounds may include compounds obtained by coordinating acetylacetone or ethyl acetoacetate with polyvalent metal, such as aluminum, iron, zinc, tin, titanium, antimony, magnesium, and/or vanadium, without being limited thereto.

The polyfunctional crosslinking agent is preferably present in an amount of 0.01 to 10 parts by weight, preferably 0.01 to 5 parts by weight, based on 100 parts by weight of the acrylic resin. If the amount of the crosslinking agent is less than 0.01 parts by weight, cohesion of the cured product can be deteriorate, causing bubbles under high-temperature conditions. If the amount of the crosslinking agent is greater than 10 parts by weight, the adhesive is excessively cured, causing decrease in adhesive strength and peeling strength. Thus, peeling or separation between layers can occur, thereby reducing durability.

The adhesive composition according to the present invention may further include a silane coupling agent. The silane coupling agent enhances adhesion and adhesive stability of the cured product to an adherend, thus improving heat resistance and moisture resistance, and enhancing adhesive reliability when the cured product is left for a long time under high-temperature and/or high-humidity conditions.

There is no restriction as to the kind of the silane coupling agent, and examples of the silane coupling agent may include γ-glycidoxypropyltrimethoxysilane, γ-glycidoxypropylmethyldiethoxysilane, γ-glycidoxypropyltriethoxysilane, 3-mercaptopropyltrimethoxysilane, vinyltrimethoxysilane, vinyltriethoxysilane, γ-methacryloxypropyltrimethoxysilane, γ-methacryloxypropyltriethoxysilane, γ-aminopropyltrimethoxysilane, γ-aminopropyltriethoxysilane, 3-isocyanatopropyltriethoxysilane, and γ-acetoacetatetripropyltrimethoxysilane, which may be used alone or as mixtures.

The silane coupling agent may be present in an amount of 0.005 to 5 parts by weight based on 100 parts by weight of the acrylic resin. If the amount of the silane coupling agent is less than 0.005 parts by weight, tack increase can be insignificant. If the amount of the silane coupling agent is greater than 5 parts by weight, bubbles or peeling of the adhesive can occur, thereby deteriorating durability.

The adhesive composition according to the present invention may further include a tackifier in order to adjust tack performance.

Examples of the tackifier may include, without being particularly limited to, for example, hydrocarbon resins or hydrogenated products thereof; rosins or hydrogenated products thereof; rosin esters or hydrogenated products thereof; terpene resins or hydrogenated products thereof; terpene phenolic resins or hydrogenated products thereof; and polymerized rosins or polymerized rosin esters, which may be used alone or as mixtures.

The tackifier may be present in an amount of 1 to 100 parts by weight based on 100 parts by weight of the acrylic resin. If the amount of the tackifier is less than 1 part by weight, the tackifier does not work properly. If the amount of the tackifier is greater than 100 parts by weight, improvement in compatibility and/or cohesion becomes insignificant.

The acrylic adhesive composition according to the present invention may further include at least one additive selected from the group consisting of epoxy resins, crosslinking agents, UV stabilizers, antioxidants, toning agents, reinforcing agents, fillers, antifoaming agents, surfactants, and plasticizers so long as the additives do not affect aspects of the present invention.

Another aspect of the present invention provides an adhesive film for a touch panel comprising a base film; and an adhesive layer formed on one or both sides of the base film and including a cured product of the adhesive composition according to the present invention.

Fig. 1 is a side-sectional view of an adhesive film 10 according to one embodiment of the present invention. As shown in Fig. 1, the adhesive film 10 includes a base film 11; and adhesive layers 12 formed on both sides of the base film 11. However, the adhesive film shown in Fig. 1 is provided only as an illustrative example. That is, in the adhesive film according to this embodiment, an adhesive layer may be formed on only one side of the base film, or only a sheet of adhesive layer may be provided without a base film, as needed.

There is no restriction as to a method of manufacturing the adhesive layers by curing the adhesive composition. In some embodiments, the adhesive composition or a coating solution prepared using the same is applied to a proper

substrate using a general instrument, e.g., a bar coater, and cured, thereby preparing an adhesive layer.

Curing may be carried out after volatile components or reaction residues are completely removed from the adhesive composition or the coating solution so as not to cause formation of bubbles. Accordingly, a decrease in elastic modulus of the adhesive due to too low a crosslink density or molecular weight may be prevented. Further, it is possible to prevent formation of bubbles between adhesive layers, which can grow into scattering objects.

There is no restriction as to a method of curing the adhesive composition or the coating solution. For example, curing may be carried out by properly heating the coating layer or aging the coating layer under predetermined conditions.

In the adhesive film, the adhesive layers have a thickness of 20 to 150 μm, preferably 20 to 100 μm. Within this range, the adhesive film may be applied to a thin touch panel or touchscreen, and has excellent chemical resistance, adhesion, wettability, resistance maintenance, and corrosion resistance for electrodes.

There is no restriction as to the kind of the base film. For example, any plastic film commonly used in the art may be used. In the present invention, examples of the base film include a PET film, a polytetrafluoroethylene film, a polyethylene film, a polypropylene film, a polybutene film, a polybutadiene film, a vinyl chloride copolymer film, a polyurethane film, an ethylene-vinyl acetate film, an ethylene-propylene copolymer film, an ethylene-ethyl acetate copolymer film, an ethylene-methyl acetate copolymer film, or a polyimide film. Preferably, a PET film is used, without being limited thereto.

In the adhesive film, the base film has a thickness of 5 to 50 μm, preferably 10 to 30 μm. Within this range, the adhesive film can not only be applied to a thin touch panel or touchscreen but have excellent chemical resistance, adhesion, wettability, resistance maintenance, and corrosion resistance for an electrode.

The adhesive film of the present invention may further include a release film formed on the adhesive layers as necessary.

Fig. 2 is a side-sectional view of an adhesive film 20 according to another embodiment of the present invention. As shown in Fig. 2, the adhesive film 20 includes a base film 11; adhesive layers 12 formed on both sides of the base film 11; and release films 21a, 21b formed on the adhesive layers 12.

There is no restriction as to the kind of the release film. In the present invention, for example, one side of various plastic films, used for the base film, undergoes proper release treatment, thereby preparing a release film. In this case, examples of a releasing agent used for release treatment may include alkyd, silicone, fluorine, unsaturated ester, polyolefin, or wax release agents. In particular, alkyd, silicone, and fluorine release agents may be used in terms of heat resistance, without being limited thereto.

The release film may have any thickness, which may be adjusted properly depending on purposes. For example, the release film has a thickness of 10 to 100 μm, preferably 30 to 90 μm, and more preferably 40 to 80 μm.

A further aspect of the present invention provides a touch panel comprising an upper conductive film having a conductive layer formed on one surface thereof; a lower conductive film having a conductive layer formed on one surface thereof to be separated from the conductive layer of the upper conductive film while facing each other; and an adhesive layer comprising a cured product of the adhesive composition according to the present invention, the adhesive layer being formed on each of edges of the upper and lower conductive films to bond the conductive films to each other.

The touch panel may have any structure so long as the adhesive composition according to the present invention is applied to the touch panel.

Fig. 3 shows a touch panel according to one embodiment of the invention.

Referring to Fig. 3, a touch panel 30 includes two sheets of conductive films 31a, 31b, each of which has a conductive layer 31c and is stacked via an adhesive layer 12 such that surfaces having the conductive layers 31c face each other and are separated from each other. In this case, as shown in Fig. 3, the adhesive layers 12 are attached to the conductive layers 31c on edges of the conductive films 31a, 31b.

There is no restriction as to the kind of the conductive film, and any conductive film in the art may be used. For example, the conductive film may be a transparent plastic film having an ITO electrode layer on one surface thereof.

Examples of the transparent plastic film may include PET films, polytetrafluoroethylene films, polyethylene films, polypropylene films, polybutene films, polybutadiene films, vinyl chloride copolymer films, polyurethane films, ethylene-vinyl acetate films, ethylene-propylene copolymer films, ethylene-ethyl acetate copolymer films, ethylene-methyl acetate copolymer films, or polyimide films. In particular, a PET film may be used, without being limited thereto.

Fig. 4 shows a touch panel 40 according to another embodiment of the present invention. As shown in Fig. 4, the touch panel 40 may further include electrode layers 41 formed on conductive layers 31c of conductive films 31a, 31b. In this case, as shown in Fig. 4, the electrode layers 41 may be formed on edges of the conductive layers 31c of the conductive films 31a, 31b. Adhesive layers 12 may bond the conductive films 31a, 3b, sealing the electrode layers 41 therein. In this embodiment, there is no restriction as to a composition of the electrode layers. For example, the electrode layers may be formed of silver (Ag) paste.

Fig. 5 shows a touch panel according to a further embodiment of the present invention. In the touch panel 50 shown in Fig. 5, electrode layers 41 are formed on conductive layers 31 c, show in Fig. 4, and may be sealed by insulating layers 51. In this case, adhesive layers 12 are attached to the insulating layers 51 sealing the electrode layers 41, and

thus two sheets of conductive films 31a, 31b are disposed to face each other. In this embodiment, there is no restriction as to a material of the insulating layers, and any material generally known in the art may be used.

**Examples**

Next, the present invention will be explained in more detail with reference to examples and comparative examples.

**Preparative Example 1: Preparation of acrylic resin (A)**

A monomer mixture including 65 parts by weight of ethylhexyl acrylate (EHA), 25 parts by weight of methyl acrylate (MA), and 10 parts by weight of hydroxybutyl acrylate (HBA) was put into a 1L reactor equipped with a reflux condenser for supply of nitrogen gas and for easy temperature adjustment, and ethyl acetate (EAc) as a solvent was added thereto. Then, after oxygen was purged from the reactor with nitrogen gas for 1 hour, the mixture was evenly stirred while maintaining temperature at 62°C, followed by addition of 0.03 parts by weight of azobisisobutyronitrile (AIBN) diluted with ethyl acetate to 50% as a reaction initiator. Subsequently, the mixture was reacted for about 8 hours, thereby preparing an acrylic resin (A) having a weight average molecular weight of 1,500,000 and a glass transition temperature of -30°C.

**Preparative Examples 2 and 3: Preparation of acrylic resins (B), (C)**

Acrylic resins (B) and (C) were prepared in the same manner as in Preparative Example 1 except that the monomers were added according to compositions listed in Table 1.

**TABLE 1**

| | | Preparative Example 1 | Preparative Example 2 | Preparative Example 3 |
|---|---|---|---|---|
| | | Acrylic resin (A) | Acrylic resin (B) | Acrylic resin (C) |
| Monomer Composition (parts by weight) | EHA | 65 | 85 | 65 |
| | MA | 25 | 5 | 25 |
| | AA | 10 | 10 | 10 |
| Mw (million) | | 1.5 | 2 | 0.7 |
| Tg (°C) | | -30 | -55 | -30 |
| EHA: Ethylhexyl acrylate<br>MA: Methacrylate<br>AA: Acrylic acid<br>Mw: Molecular weight<br>Tg: Glass transition temperature | | | | |

**Example 1**

100 parts by weight of the acrylic resin (A) prepared in Preparative Example 1, 0.4 parts by weight of a bifunctional aziridine crosslinking agent as a polyfunctional crosslinking agent, and 0.2 parts by weight of a silane coupling agent (KBM 403, Shin-Etsu Chemical) were mixed into an adhesive composition, which was then diluted with a solvent, thereby preparing a coating solution. The coating solution was applied to a release-treated PET film (thickness: 75 μm) to a thickness of about 30 μm after drying. The product was dried at about 100°C for 5 minutes or longer and then aged under suitable conditions, thereby forming an adhesive layer having a thickness of 30 μm. The adhesive layers were formed on both sides of a PET film with a thickness of 12 μm by pressing, thereby producing an adhesive film.

**Example 2 and Comparative Examples 1 and 2**

Adhesive films were prepared in the same manner as in Example 1 except that adhesive compositions were prepared according to compositions listed in Table 1.

**TABLE 2**

| | | Example | | Comparative Example | |
|---|---|---|---|---|---|
| | | 1 | 2 | 1 | 2 |
| Acrylic resin | Kind | A | B | C | C |
| | Content | 100 | 100 | 100 | 100 |
| Crosslinking agent | | 0.4 | 0.4 | 0.4 | 0.8 |
| Silane coupling agent | | 0.2 | 0.2 | 0.2 | 0.2 |
| Crosslinking agent: Bifunctional aziridine crosslinking agent<br>Unit of amount: Parts by weight | | | | | |

Physical properties of the adhesive films prepared in the examples and the comparative examples were evaluated as follows.

**1. Gel content**

The adhesives prepared in the examples and the comparative examples were stored in a constant temperature and humidity room (23°C, 60 %RH) for about 7 days. Then, 0.3 g of each adhesive was put in 74 μm (200-mesh) stainless wire mesh, deposited in 100 mL of ethyl acetate, and stored in a dark room at room temperature for 48 hours. An insoluble fraction was separated and dried in an oven at 120°C for 4 hours, followed by measuring the dry mass thereof. Then, each measurement result was substituted into Equation 3 to calculate the gel content.

**2. High temperature shear strength**

Each of the adhesive films prepared in the examples and the comparative examples was cut into a 2.54 cm × 2,54 cm x 72 μm (1 in x 1 in x 72 μm) (width x length x thickness) piece. After removing the release film, one side of the adhesive film was attached to an ITO surface of a PET film and the other side thereof was attached to an SUS surface. Here, attaching the adhesive film was carried out by rolling a 5 kg roller back and forth five times according to ASTM D1002. Subsequently, the adhesive film was left at room temperature for 24 hours and then evaluated as to high temperature shear strength in a 100°C oven at a crosshead speed of 5 mm/min using a universal testing machine (UTM, Zwick).

**3. Chemical resistance**

Chemical resistance of the adhesives was evaluated using a Touch Screen Panel (TSP) shown in Fig. 3. In detail, each of the adhesive films prepared in the examples and the comparative examples was cut into a 4 cm x 10 cm (width x length) piece. A 3.4 cm x 9.4 cm (width x length) central portion was removed from the 4 cm x 10 cm adhesive film, thereby preparing the adhesive film having a 3 mm-thick edge. After removing the release film, the adhesive film was placed between two sheets of conductive PET films 31a and 31b having ITO layers 31c respectively formed on one surfaces thereof, shown in Fig. 3, thereby preparing a TSP. Then, artificial sebum (ESTASAN® 3580, Kosher) was applied to a lateral side of the TSP using a brush. The TSP was stored in a constant temperature and humidity room (60°C, 90 %RH) for 150 hours. After taking the TSP out of the room, a 50 kg weight was placed on the TSP for 12 hours, followed by evaluating narrowing of a gap between the upper ITO PET film 31a and the lower ITO PET film 31b by observation.

<Evaluation of chemical resistance>

O: No narrowing
X: Narrowing observed

**TABLE 3**

| | Example | | Comparative Example | |
|---|---|---|---|---|
| | 1 | 2 | 1 | 2 |
| Gel content (%) | 52 | 35 | 50 | 85 |
| High temperature shear strength ($Kg/in^2$) | 28 | 25 | 18 | 25 |
| Chemical resistance (100°C) | O | O | × | × |

As seen from Table 3, the adhesive films according to the examples of the present invention exhibited excellent chemical resistance, such as resistance to sebum. However, the adhesive films according to Comparative Examples 1 and 2, which have gel contents and/or high temperature shear strength values not in the range of the present invention, exhibited unsatisfactory chemical resistance.

**Claims**

1. An adhesive composition for a touch panel comprising an acrylic resin and a polyfunctional crosslinking agent, and satisfying the following Equations 1 and 2:

[Equation 1]

$$X_1 \leq 55$$

[Equation 2]

$$X_2 \geq 3.1 \ \ Kg/cm^2 \qquad (X_2 \geq 20\ Kg/in^2),$$

where $X_1$ represents a gel content of an adhesive, which is a cured product of the adhesive composition, and $X_2$ represents high temperature shear strength of the adhesive measured as follows: with one side of the adhesive attached to an indium tin oxide (ITO) surface of a polyethylene terephthatate (PET) film and the other side thereof attached to a stainless steel (SUS) surface, the adhesive is left at room temperature for 24 hours, followed by measurement of shear strength at a high temperature of 100°C and a crosshead speed of 5 mm/min.

2. The adhesive composition according to claim 1, wherein the acrylic resin has a weight average molecular weight of 1,000,000 or more.

3. The adhesive composition according to claim 1, wherein the acrylic resin has a glass transition temperature of -60°C or more.

4. The adhesive composition according to claim 1, wherein the acrylic resin comprises a polymer of a monomer mixture comprising a (meth)acrylic acid ester monomer and a crosslinking monomer.

5. The adhesive composition according to claim 4, wherein the crosslinking monomer comprises a hydroxyl group containing monomer, a carboxylic group containing monomer, or a nitrogen containing monomer.

6. The adhesive composition according to claim 1, wherein the polyfunctional crosslinking agent comprises at least one selected from the group consisting of isocyanate compounds, epoxy compounds, aziridine compounds, and metal chelate compounds.

7. The adhesive composition according to claim 1, wherein the polyfunctional crosslinking agent is present in an amount of 0.01 to 10 parts by weight based on 100 parts by weight of the acrylic resin.

8. An adhesive film for a touch panel comprising:

a base film; and
an adhesive layer formed on one or both sides of the base film and comprising a cured product of the adhesive composition according to any one of claims 1 to 7.

**9.** The adhesive film according to claim 8, wherein the adhesive layer has a thickness of 20 to 150 μm.

**10.** The adhesive film according to claim 8, wherein the base film comprises a polyethylene terephthalate (PET) film.

**11.** The adhesive film according to claim 8, wherein the base film has a thickness of 5 to 50 μm.

**12.** The adhesive film according to claim 8, further comprising a release film formed on the adhesive layer.

**13.** A touch panel comprising:

an upper conductive film having a conductive layer formed on one surface thereof;
a lower conductive film having a conductive layer formed on one surface thereof to be separated from the conductive layer of the upper conductive film while facing each other; and
an adhesive layer comprising a cured product of the adhesive composition according to claim 1, the adhesive layer being formed on each of edges of the upper and lower conductive films to bond the conductive films to each other.

**14.** The touch panel according to claim 13, further comprising: electrode layers formed on edges of the upper and lower conductive films and being disposed inside the adhesive layer bonding the conductive films.

**15.** The touch panel according to claim 13, further comprising: electrode layers formed on edges of the upper and lower conductive films, and insulating layers sealing the electrode layers, wherein the adhesive layers bonding the conductive films are attached to the respective insulating layers.

**Patentansprüche**

**1.** Haftzusammensetzung für einen Berührungsbildschirm, umfassend ein Acrylharz und ein polyfunktionelles Vernetzungsmittel, das die folgenden Gleichungen 1 und 2 erfüllt:

[Gleichung 1]

$$X_1 \leq 55$$

[Gleichung 2]

$$X_2 \geq 3.1\ \mathrm{Kg/cm^2}\ (X_2 \geq 20\ \mathrm{Kg/in^2}),$$

wobei $X_1$ einen Gelgehalt eines Haftmittels darstellt, das ein gehärtetes Produkt der Haftzusammensetzung ist, und $X_2$ eine Hochtemperatur-Scherfestigkeit des Haftmittels darstellt, die wie folgt gemessen wird: das Haftmittel wird bei Raumtemperatur 24 h stehen gelassen, dem sich die Messung der Scherfestigkeit bei einer hohen Temperatur von 100 °C und mit einer Kreuzkopfgeschwindigkeit von 5 mm/min anschließt, wobei eine Seite des Haftmittels an einer Indium-Zinnoxid (ITO)-Oberfläche eines Polyethylenterephthalat (PET)-Films und die andere Seite davon an einer Edelstahl (SUS)-Oberfläche befestigt ist.

**2.** Haftzusammensetzung nach Anspruch 1, wobei das Acrylharz ein gewichtsgemitteltes Molekulargewicht von 1.000.000 oder mehr aufweist.

**3.** Haftzusammensetzung nach Anspruch 1, wobei das Acrylharz eine Glasübergangstemperatur von -60 °C oder mehr aufweist.

**4.** Haftzusammensetzung nach Anspruch 1, wobei das Acrylharz ein Polymer einer Monomermischung umfassend

ein (Meth)acrylsäureestermonomer und ein Vernetzungsmonomer umfasst.

**5.** Haftzusammensetzung nach Anspruch 4, wobei das Vernetzungsmonomer ein eine Hydroxylgruppe enthaltendes Monomer, ein eine Carboxylgruppe enthaltendes Monomer oder ein Stickstoff enthaltendes Monomer umfasst.

**6.** Haftzusammensetzung nach Anspruch 1, wobei das polyfunktionelle Vernetzungsmittel mindestens eine Verbindung, ausgewählt aus der Gruppe, bestehend aus Isocyanatverbindungen, Epoxyverbindungen, Aziridinverbindungen und Metallchelatverbindungen umfasst.

**7.** Haftzusammensetzung nach Anspruch 1, wobei das polyfunktionelle Vernetzungsmittel in einer Menge von 0,01 bis 10 Gew.-Teilen bezogen auf 100 Gew.-Teile des Acrylharzes vorhanden ist.

**8.** Haftfilm für einen Berührungsbildschirm, umfassend:

einen Schichtträger; und
eine Haftschicht, die auf einer Seite oder beiden Seiten des Schichtträgers ausgebildet ist und ein gehärtetes Produkt der Haftzusammensetzung nach einem der Ansprüche 1 bis 7 umfasst.

**9.** Haftfilm nach Anspruch 8, wobei die Haftschicht eine Dicke von 20 bis 150 μm aufweist.

**10.** Haftfilm nach Anspruch 8, wobei der Schichtträger einen Polyethylenterephthalat (PET)-Film umfasst.

**11.** Haftfilm nach Anspruch 8, wobei der Schichtträger eine Dicke von 5 bis 50 μm aufweist.

**12.** Haftfilm nach Anspruch 8, weiterhin umfassend einen auf der Haftschicht ausgebildeten Ablösefilm.

**13.** Berührungsbildschirm, umfassend:

einen oberen leitfähigen Film mit einer auf einer Oberfläche davon ausgebildeten leitfähigen Schicht;
einen unteren leitfähigen Film mit einer auf einer Oberfläche davon ausgebildeten leitfähigen Schicht, die von der leitfähigen Schicht des oberen leitfähigen Films getrennt ist, während sie dieser gegenüberliegt; und
eine Haftschicht, umfassend ein gehärtetes Produkt der Haftzusammensetzung nach Anspruch 1, wobei die Haftschicht an jeder der Kanten des oberen und unteren leitfähigen Films ausgebildet ist, um die beiden leitfähigen Filme miteinander zu verbinden.

**14.** Berührungsbildschirm nach Anspruch 13, weiterhin umfassend: Elektrodenschichten, die an den Kanten des oberen und unteren leitfähigen Films ausgebildet und im Inneren der die leitfähigen Filme verbindenden Haftschicht angeordnet sind.

**15.** Berührungsbildschirm nach Anspruch 13, weiterhin umfassend: Elektrodenschichten, die an den Kanten des oberen und unteren leitfähigen Films ausgebildet sind, und Isolierschichten, die die Elektrodenschichten versiegeln, wobei die die leitfähigen Filme verbindenden Haftschichten an den jeweiligen Isolierschichten befestigt sind.

## Revendications

**1.** Composition adhésive destinée à un panneau tactile comprenant une résine acrylique et un agent de réticulation polyfonctionnel, et conforme aux équations 1 et 2 ci-dessous :

[Équation 1]

$$X_1 \leq 55$$

[Équation 2]

$$X_2 \geq 3{,}1\ \mathrm{kg/cm}^2\ (X_2 \geq 20\ \mathrm{kg/po}^2),$$

où $X_1$ représente une teneur en gel d'un adhésif, qui est un produit durci de la composition adhésive, et $X_2$ représente la résistance au cisaillement à haute température de l'adhésif mesurée de la manière suivante : une face de l'adhésif étant fixée sur une surface en oxyde d'étain et d'indium (ITO) d'un film de polyéthylène téréphtalate (PET) et l'autre face étant fixée sur une surface en acier inoxydable (SUS), l'adhésif est maintenu à température ambiante pendant 24 heures puis la résistance au cisaillement est mesurée à une température élevée de 100°C et à une vitesse de traverse de 5 mm/mn.

**2.** La composition adhésive selon la revendication 1, dans laquelle la résine acrylique possède une masse moléculaire moyenne en poids supérieure ou égale à 1 000 000.

**3.** La composition adhésive selon la revendication 1, dans laquelle la résine acrylique possède une température de transition vitreuse supérieure ou égale à -60°C.

**4.** La composition adhésive selon la revendication 1, dans laquelle la résine acrylique comprend un polymère d'un mélange de monomères comprenant un monomère d'ester d'acide méthacrylique et un monomère de réticulation.

**5.** La composition adhésive selon la revendication 4, dans laquelle le monomère de réticulation comprend un monomère contenant un groupe hydroxyle, un monomère contenant un groupe carboxylique ou un monomère contenant de l'azote.

**6.** La composition adhésive selon la revendication 1, dans laquelle l'agent de réticulation polyfonctionnel comprend au moins un composé choisi dans le groupe consistant en : composés d'isocyanate, composés d'époxy, composé d'aziridine et composés de chélate de métal.

**7.** La composition adhésive selon la revendication 1, dans laquelle l'agent de réticulation polyfonctionnel est présent dans une quantité de 0,01 à 10 parties en poids sur la base de 100 parties en poids de la résine acrylique.

**8.** Film adhésif destiné à un panneau tactile comprenant :

un film de base ; et
une couche adhésive formée sur l'une ou les deux faces du film de base et comprenant un produit durci de la composition adhésive selon l'une quelconque des revendications 1 à 7.

**9.** Le film adhésif selon la revendication 8, dans lequel la couche adhésive possède une épaisseur de 20 à 150 $\mu$m.

**10.** Le film adhésif selon la revendication 8, dans lequel le film de base comprend un film de polyéthylène téréphtalate (PET).

**11.** Le film adhésif selon la revendication 8, dans lequel le film de base possède une épaisseur de 5 à 50 $\mu$m.

**12.** Le film adhésif selon la revendication 8, comprenant en outre un film de démoulage formé sur la couche adhésive.

**13.** Panneau tactile comprenant :

un film conducteur supérieur possédant une couche conductrice formée sur une surface de celui-ci ;
un film conducteur inférieur possédant une couche conductrice formée sur une surface de celui-ci de manière à être séparée de la couche conductrice du film conducteur supérieur tout en étant face à celle-ci ; et
une couche adhésive comprenant un produit durci de la composition adhésive selon la revendication 1, la couche adhésive étant formée sur chacun des bords des films conducteurs supérieur et inférieur afin de lier les films conducteurs l'un à l'autre.

**14.** Le panneau tactile selon la revendication 13, comprenant en outre : des couches d'électrodes formées sur les bords des films conducteurs supérieur et inférieur et étant disposées à l'intérieur de la couche adhésive liant les films conducteurs.

**15.** Le panneau tactile selon la revendication 13, comprenant en outre : des couches d'électrodes formées sur les bords des films conducteurs supérieur et inférieur, et des couches isolantes scellant les couches d'électrodes, dans lequel les couches adhésives liant les films conducteurs sont fixées sur les couches isolantes correspondantes.

【FIG. 1】

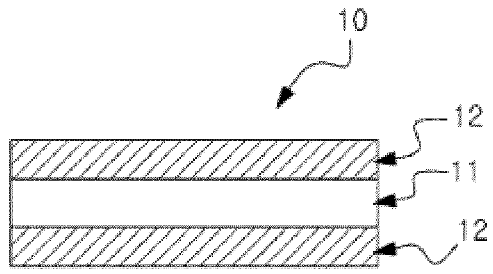


【FIG. 2】

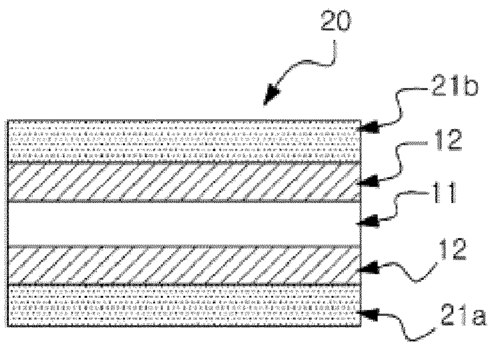


【FIG. 3】

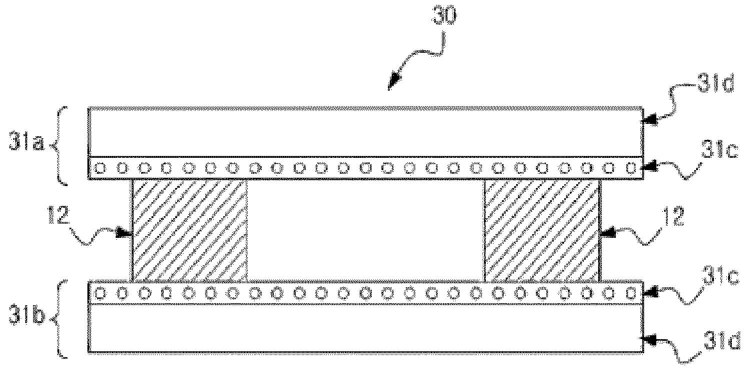

【FIG. 4】

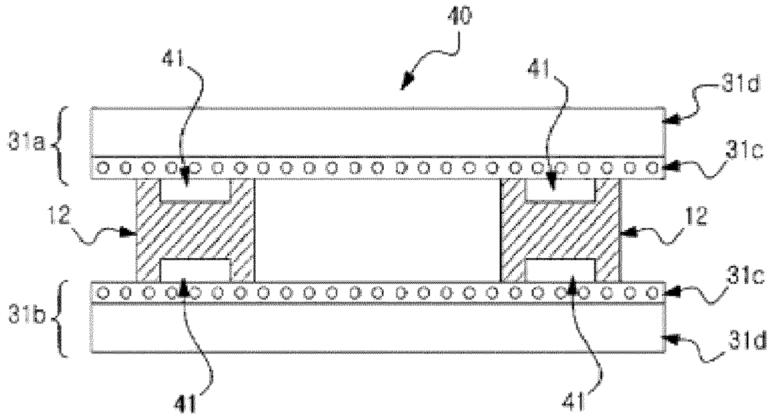
40
41
41
31d
31a
31c
12
12
31c
31b
31d
41
41

【FIG. 5】

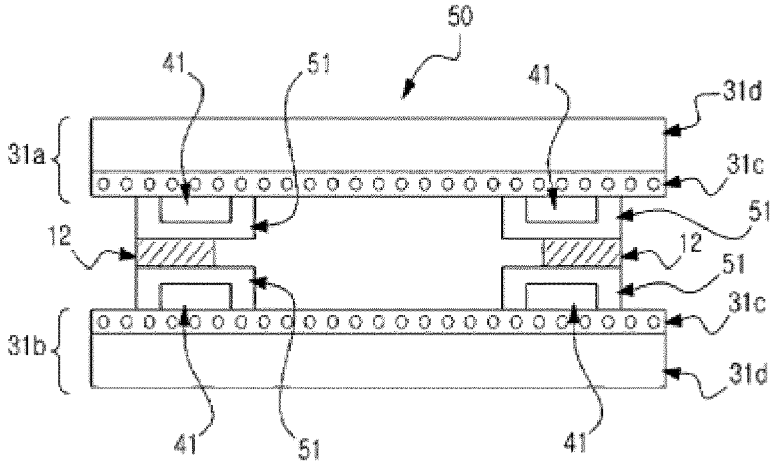
50
41
51
41
31d
31a
31c
51
12
12
51
31c
31b
31d
41
51
41

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2033998 A2
- EP 1820835 A1
- EP 11766114 A
- EP 1557135 A2